Europäisches Patentamt

European Patent Office

Office européen des brevets

(19)

(11) Veröffentlichungsnummer: **0 251 225**
**A2**

(12) # EUROPÄISCHE PATENTANMELDUNG

(21) Anmeldenummer: **87109181.5**

(22) Anmeldetag: **26.06.87**

(51) Int. Cl.⁴: **G01N 21/47** , G01N 21/59 , G01N 27/26

(30) Priorität: **27.06.86 DE 3621631**

(43) Veröffentlichungstag der Anmeldung:
**07.01.88 Patentblatt  88/01**

(84) Benannte Vertragsstaaten:
**DE FR GB IT NL SE**

(71) Anmelder: **J. Hirschmann Gerätebau GmbH & Co.KG**
**Lohestr 5**
**D-8025 Unterhaching(DE)**

(72) Erfinder: **Käser, Manfred**

**D-8951 Friesenried(DE)**

(74) Vertreter: **Feldkamp, Rainer, Dipl.-Ing. et al**
**Patentanwälte Wallach, Koch Dr. Haibach,**
**Feldkamp Postfach 920**
**D-8000 München 33(DE)**

(54) **Gerät zur Abbildung eines Objektes auf einem elektrooptischen Wandler.**

(57) Ein Gerät uzr Abbildung eines Objektes auf einem elektroootischen Wandler zur Messung der Lichtdurchlässigkeit und/oder der Lichstreuung des Objektes weist eine Lichtquelle, einen ersten Strahlengang zur Beleuchtung des Objektes und einen zweiten Strahlengang zur Abbildung des Objektes auf dem elektrooptischen Wandler auf. Es ist weiterhin ein dritter, einen Referenzstrahlengang bildender Strahlengang vorgesehen, der einen Teil des Lichtes des ersten Strahlenganges auf den gleichen elektrooptischen Wandler leitet.

## Fig.1

## Gerät zur Abbildung eines Objektes auf einem elektrooptischen Wandler

Die Erfindung bezieht sich auf ein Gerät zur Abbildung eines Objektes auf einem elektrooptischen Wandler zur Messung der Lichtdurchlässigkeit und/oder der Lichtstreuung des Objektes, mit einer Lichtquelle, mit einem ersten Strahlengang zur Beleuchtung des Objektes und mit einem zweiten Strahlengang zur Abbildung des Objektes auf dem elektrooptischen Wandler.

Ein derartiges Gerät kann beispielsweise in der Elektrophoresetechnik Verwendung finden, bei der sich das Objekt in einer Elektrophoresekammer befindet, die durch zwei mit Abstand voneinander angeordnete Glasplatten gebildet ist.

Ein Problem bei derartigen Geräten zur Abbildung eines Objektes auf einem elektrooptischen Wandler besteht einerseits darin, daß der Raumbedarf des gesamten Strahlenganges möglichst gering gehalten werden soll und daß Änderungen der Lichtleistung der Lichtquelle nicht zu Meßfehlern führen dürfen.

Die Verkleinerung des Strahlenganges stellt in vielen Fällen ein besonderes Problem dar, da das auf das Objekt auftreffende Licht und das von diesem auf den elektrooptischen Wandler weitergeleitete Licht möglichst senkrecht auf das Objekt auftreffen sollte, da andernfalls unkontrollierte Beugungs-und Streuugseffekte hervorgerufen werden. Dies ist insbesondere dann der Fall, wenn das abzubildende Objekt flächig ist, wie dies beispielsweise bei Elektrophoreseobjekten der Fall ist. Die Verkleinerung des Raumbedarfes wird weiterhin dadurch erschwert, daß zur Kontrolle der Licht leistung der Lichtquelle zusätzliche Wandler erforderlich sind, die die Lichtleistung messen und eine Kompensation von Lichtleistungsänderungen ermöglicht.

Der Erfindung liegt die Aufgabe zugrunde, ein Gerät der eingangs genannten Art zu schaffen, das bei geringem Raumbedarf ein senkrechtes Auftreffen des Lichtes aus dem ersten Strahlengang auf das Objekt ermöglicht und bei dem Änderungen der Lichtleistung keine Meßfehler zur Folge haben.

Diese Aufgabe wird durch die im kennzeichnenden Teil des Patentanspruchs 1 angegebenen Merkmale gelöst.

Vorteilhafte Ausgestaltungen und Weiterbildungen der Erfindung ergeben sich aus den Unteransprüchen.

Durch die erfindungsgemäße Ausgestaltung des Gerätes wird immer ein Teil des von der Lichtquelle kommenden Lichtes in dem ersten Strahlengang über den Referenzstrahlengang auf den gleichen elektrooptischen Wandler geleitet, auf den auch das Bild des Objektes von dem zweiten Strahlengang abgebildet wird, so daß eine Kompensation von Änderungen der Lichtleistung der Lichquelle einwandfrei durchgeführt werden kann ohne daß ein zweiter Wandler zur Kontrolle der Lichtleistung erforderlich ist. Weiterhin werden auch Änderungen der Lichtleistung innerhalb des ersten Strahlenganges selbst korrigiert.

Gemäß einer Ausgestaltung der Erfindung leitet der Referenzstrahlengang das Licht des ersten Strahlenganges örtlich versetzt auf den Wandler, so daß dauernd ein Vergleich des Meßbildes mit dem Referenzbild möglich ist.

Gemäß einer weiteren Ausgestaltung der Erfindung leitet der Referenzstrahlengang das Licht des ersten Strahlenganges zeitlich versetzt auf den Wandler, so daß abwechselnd mit der messung des Meßbildes die Messung des Referenzbildes durgeführt werden kann.

Gemäß einer vorteilhaften Ausgestaltung der Erfindung ist vorgesehen, daß der erste Strahlengang und der Referenzstrahlengang mehrfach gefaltet sind, so daß sich trotz der Verwendung des Referenzstrahlenganges geringe Abmessungen des Gerätes ergeben.

Gemäß einer Ausgestaltung der Erfindung, bei der das Objekt mit Auflicht beleuchtet wird, ist hierbei auf der vom ersten Strahlengang abgewandten Seite des Objektes ein Spiegel und das Licht der Lichtquelle wird über einen ersten 45-Grad-Spiegel um 90 Grad umgelenkt und fällt auf einen teildurchlässigen Spiegel, der einen Teil des Lichtes des ersten Strahlenganges in den referenzstrahlengang einleitet und andererseits das Ojekt beleuchtet. Das von dem Spiegel auf der Rückseite des Objekts zurückgespiegelte Licht wird über den teildurchlässigen Speigel ohne Richtungsänderung in den zweiten Strahlengang eingeleitet, dessen Richtung zur Richtung des ersten Strahlenganges vor dem ersten Umlenkspiegel entgegengesetzt ist. Der Referenzstrahlengang enthält zwei weitere 45-Grad-Spiegel, die das Licht in den zweiten Strahlengang über einen teildurchlässigen Spiegel einspiegeln.

Bei einer weiteren Ausführungsform der Erfindung, die mit Durchlicht arbeitet, enthält der erste Strahlengang ebenfalls einen ersten 45-Grad-Umlenkspiegel und einen zweiten 45-Grad-Umlenkspiegel, zwischen denen ein teildurchlässiger Spiegel angeordnet ist, der einen Teil des Lichtes in den Referenzstrahlengang einleitet. Von dem zweiten Umlenkspiegel aus läuft das Licht zum Objekt und durchläuft dieses ohne Richtungsänderung zum zweiten Strahlengang, in dem ebenfalls ein teildurchlässiger Spiegel angeordnet ist, der zum Einspie geln des Lichtes des Referenzstrahlenganges dient, der einen weiteren Umlenkspiegel enthält, der das Licht von dem teildurchlässigen Spiegel im ersten Strahlengang empfängt. Auch hierbei ist die Richtung des Lichtes in dem zweiten Strahlengang entgegengesetzt zur Richtung des ersten Strahlenganges, wobei entsprechend auch der Referenzstrahlengang einen Abschnitt aufweist, in dem das Licht in entgegengesetzter Richtung zum ersten Strahlengang verläuft, so daß sich geringe Längenabmessungen der Gesamtheit der Strahlengänge ergeben.

Ausführungsformen der Erfindung werden im folgenden anhand ihrer Anwendung auf ein Elektrophoresegerät noch näher erläutert.

In der Zeichnung zeigen:

Fig. 1 eine erste Ausführungsform des Elektrophoresegerätes für Auflichtbeleuchtung,

Fig. 2 eine Ausführungsform des Elektrophoresegerätes für Durchlichtbeleuchtung.

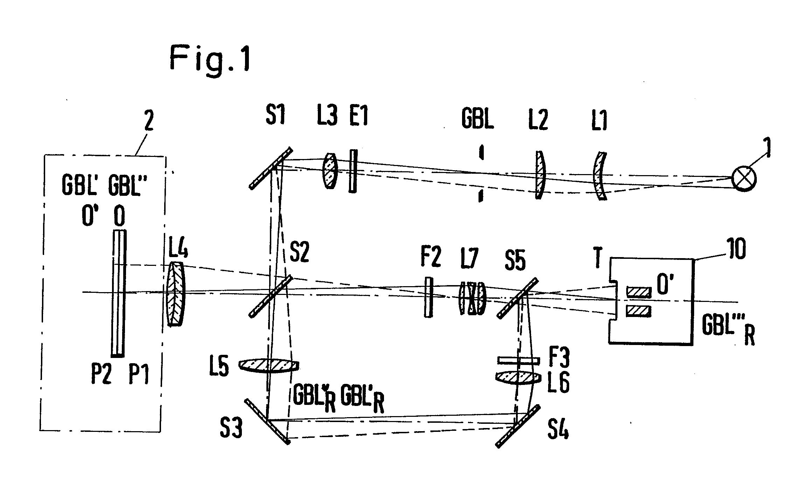

Bei der in Fig. 1 dargestellten Ausführungsform ist das Objekt durch eine Eletrophoresekammer 2 gebildet, die eine Glasplatte P1 und eine an ihrer Rückseite verspiegelte Glasplatte P2 aufweist, wobei sich das eigentliche Elektrophoreseobjekt zwischen diesen Glasplatten befindet und eine Lichtstreuung oder Lichtabsorption bewirkt.

Eine Lichtquelle 1 wirkt mit einem ersten Strahlengang zusammen, der Kondensorlinsen L1, L2 sowie eine Gesichtsfeldblende GBL, eine weitere Linse L3, einen ersten 45-Grad-Spiegel S1 und einen teildurchlässigen Umlenkspiegel S2 enthält. Der unter 45 Grad angeordnete Spiegel S1 lenkt das Licht um 90 Grad gegenüber der ersten Richtung zwischen der Lichtquelle 1 und dem Spiegel S1 um, wobei ein Teil dieses Lichtes den teildurchlässigen Spiegel passiert und über eine Linse L5 in einen Referenzstrahlengang eingeleitet wird. Der andere Teil des Lichtes wird erneut um 90 Grad gelenkt, so daß er wieder in der ersten Richtung verläuft und über eine Linse L4 in die Elektrophoresekammer gelangt. Das von der auf ihrer Rückseite verspiegelten Glasplatte zurückgespiegelte Bild des Elektrophoreseobjektes durchläuft erneut die Linse L4 und den teildurchlässigen Spiegel S2 ohne Richtungsänderung und gelangt über ein Objektiv L7 und einen unverspiegelten Bereich eines 45-Grad-Spiegels S5 auf die Zielfläche des elektrooptischen Wandlers 10, der durch eine Fernsehkamera gebildet sein kann.

Der Referenzstrahlengang enthält einen ersten und zweiten 45-Grad-Umlenkspiegel S3, S4, zwischen den das von der Linse L5 kommende Licht in entgegengesetzter Richtung zur ersten Richtung verläuft, wobei das Licht von dem zweiten Umlenkspiegel über eine Linse L6 auf den verspiegelten Bereich des Spiegels S5 fällt, der dieses Licht ebenfalls auf die Zielfläche des elektrooptischen Wandlers 10 leitet, und zwar vorzugsweise versetzt gegenüber dem Bild des Elektrophoresegerätes, so daß auf dieser Zielfläche ein Meßbild und ein Referenzbild zur Verfügung stehen, die miteinander vergleichbar sind, um Änderungen der Lichtleistung der Lichquelle 1 oder der Verluste in dem ersten Strahlengang zu kompensieren.

Bei der in Fig. 1 dargestellten Ausführungsform sind das Bild des Objektes und das Bild aus dem Referenzstrahlengang auf dem Wandler 10 zueinander seitenverkehrt. Wenn dies unerwünscht ist, kann in dem Referenzstrahlengang beispielsweise zwischen den Spiegeln S3 und S4 eine weitere Umkehrlinse angeordnet werden, die selbstverständlich auch an anderer Stelle des Referenzstrahlenganges oder des zweiten Strahlenganges eingesetzt werden kann, um die Seitenvertauschung zu beseitigen.

Es ist weiterhin möglich, das Meßbild und das Referenzbild zeitlich nacheinander, beispielsweise durch einen entsprechenden steuerbaren Verschluß in dem zweiten Strahlengang und dem Referenzstrahlengang abzubilden, wodurch ggf. eine Vereinfachung der nachgeschalteten Auswerteeinrichtungen des elektrooptischen Wandlers 10 erzielt werden kann.

Mit der beschriebenen Ansführungsform lassen sich weiterhin Fluoreszenzmessungen durchführen, wenn der Spiegel S2 als Farbteiler ausgeführt ist, wobei in dem ersten Strahlengang ein Erregerfilter F1 und im zweiten Strahlengang ein Sperrfilter F2 angeordnet wird.

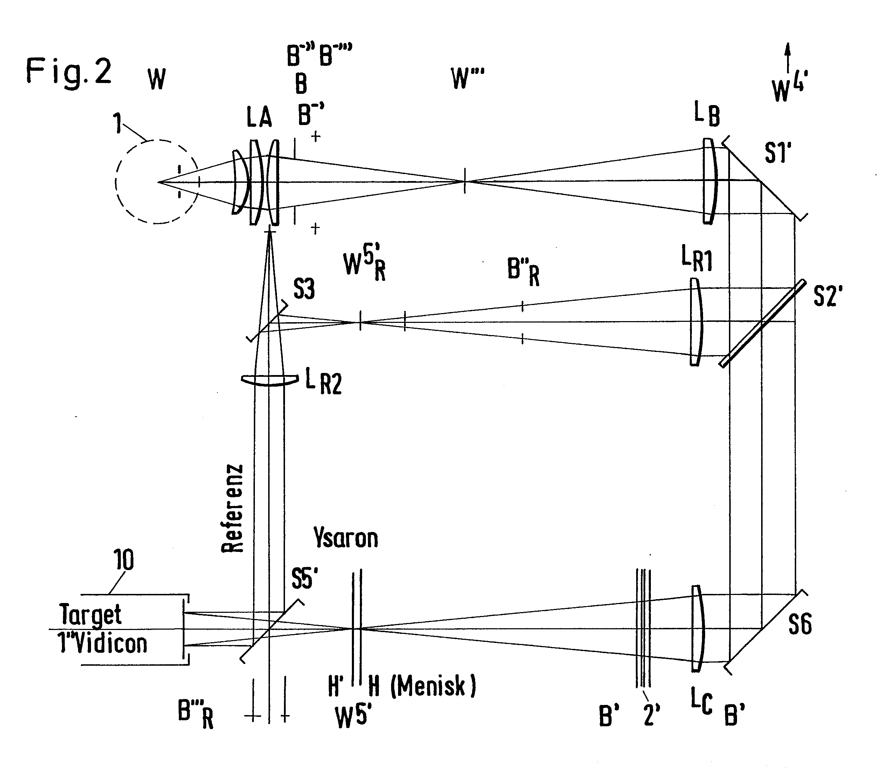

Bei der zweiten, in Fig. 2 dargestellten Ausführungsform enthält der erste Strahlengang ausgehend von der Lichtquelle 1, eine erste Linsenanordnung LA und zweite Linse LB, die das Licht auf einen ersten 45-Grad-Spiegel S1' leitet. Dieser Spiegel lenkt das Licht um 90 Grad um und leitet es über eine teildurchlässigen Spiegel S2' auf einen zweiten 45-Grad-Spiegel S6. Der teildurchlässige Speigel S2' speigelt einen Teil des Lichtes nach Richtungsänderung um 90 Grad in Referenzstrahlengang über eine linse LR1 ein.

Der zweite Umlenkspiegel S6 lenkt das Licht in eine Richtung um, die zu der ersten Richtung im ersten Strahlengang zwischen der Lichtquelle und dem ersten Imlenkspiegel S1' entgegengesetzt ist, wobei dieses Licht ein Linse LC und die Elektrophoresekammer 2' durchläuft, die in diesem Fall durch zwei mit Abstand voneinander angeordnete Glasplatten gebildet ist. Nach dem Durchlaufen der Elektrophoresekammer 2' gelangt das Licht des ersten Strahlenganges in den zweiten Strahlengang, in dem wiederum ein teildurchlässiger Spiegel S5' angeordnet ist, der zur Einspiegelung des Lichtes des Referenzstrahlenganges in den zweiten Strahlengang dient. Dieser Referenzstrahlengang enthält außer der Linse LR1 einen weiteren Umlenkspiegel S3', wobei das Licht zwischen der Linse LR1 und dem Umlenkspiegel S3' in einer zur

ersten Richtung engegengesetzten Richtung verläuft. Der Spiegel S3' leitet das Licht des Referenzstrahlenganges über eine Linse LR2 auf den teildurchlässigen Spiegel S5' in den zweiten Strahlengang.

Bei beiden beschriebenen Ausführungsformen ergibt sich trotz der Ausbildung eines Referenzstrahlengangs eine relativ kompakte Anordnung geringer Baulänge, und zwar sowohl für eine Durchlichtbeleuchtung als auch für eine Auflichtbeleuchtung.

## Ansprüche

1. Gerät zur Abbildung eines Objektes auf einem elektrooptischen Wandler zur Messung der Lichtdurchlässigkeit und/oder der Lichtstreuung des Objektes, mit einer Lichquelle, einem ersten Strahlengang zur Beleuchtung des Objektes und mit einem zweiten Strahlengang zur Abbildung des Objektes auf dem elektrooptischen Wandler, dadurch **gekennzeichnet,** daß ein dritter einen Referenzstrahlengang (S2, S3, S4, S5; S2', S3', S5') bildender Strahlengang vorgesehen ist, der einen Teil des Lichtes des ersten Srahlenganges (L1, L2, L3, S1, S2; LA, LB, S1', S2', S5, LC) auf den gleichen elektrooptischen Wandler (10) leitet.

2. Gerät nach Anspruch 1, dadurch **gekennzeichnet,** daß der Referenzstrahlengang das Licht des ersten Strahlenganges örtlich ver setzt gegenüber dem Bild des Objektes auf den Wandler (10) leitet.

3. Gerät nach Anspruch 1, dadurch **gekennzeichnet,** daß der Referenzstrahlengang das Licht des ersten Strahlenganges zeitlich versetzt zum Licht des zweiten Strahlenganges auf den Wandler 910) leitet.

4. Gerät nach einem der Ansprüche 1 - 3, dadurch **gekennzeichnet,** daß das objekt mit Auflicht beleuchtet wird, daß der erste Strahlengang (L1, L2, L3, S1, S2) einen ersten 45-Grad-Spiegel (S1), auf den das Licht der Lichquelle (1) in einer ersten Richtung auftrifft, und einen teildurchlässigen 45-Grad-Spiegel (S2) aufweist, der das Licht von dem ersten Spiegel empfänft und einen Teil dieses Lichtes auf das Objekt (2) leitet, während der den teildurchlässigen Spiegel durchlaufende Teil des Lichtes in den Referenzstrahlengang eingeleitet wird.

5. Gerät nach einem der Ansprüche 1 - 4, dadurch **gekennzeichnet,** daß der teildurchlässige Spiegel (S2) das Licht des ersten Strahlenganges in einer der ersten Richtung ensprechenden Richtung auf das Objekt leitet, daß hinter dem Objekt (2) ein Spiegel (P2) angeordnet ist, der das durch das Objekt hindurchlaufende Licht zum teildurchlässigen Spiegel (S2) zurückleitet und durch diesen hindurch in den zweiten Strahlengang (L7, S5) einleitet.

6. Elektrophoresegerät nach Anspruch 4 oder 5, dadurch **gekennzeichnet,** daß der Referenzstrahlengang einen ersten 45-Grad-Umlenkspiegel (S3) aufweist, der das von dem teildurchlässigen Spiegel (S2) abgeleitete Licht in zum ersten Strahlengang entgegengesetzter Richtung weiterleitet, daß der Referenzstrahlengang einen zweiten 45-Grad-Umlenkspiegel (S4) aufweist, der das Licht von dem ersten Umlenkspiegel (S3) in Richtung auf den zweiten Strahlengang umlenkt und daß im Bereich des zweiten Strahlenganges ein weiterer Speigel (S5) angeordnet ist, der das Licht von dem ersten teildurchlässigen Spiegel (S2) nicht beeniflußt und der das Licht von dem zweiten Umlenkspiegel (S4) auf den Wandler (10) umlenkt.

7. Gerät nach einem der Ansprüche 1 - 3, dadurch **gekennzeichnet,** daß das Objekt (2) mit Durchlicht beleuchtet wird, daß der erste Strahlengang (S1', S2', S6', LC) einen ersten 45-Grad-Umlenk spiegel (S1'), auf den das Licht von der Lichtquelle (1) in einer ersten Richtung auftrifft, einen Strahlteiler (S2'), der das Licht von dem Umlenkspiegel (S1') auf einen in dem ersten Strahlengang angeordneten zweiten Umlenkspiegel (S6) ohne Richtungsänderung und auf einen dritten in dem Referenzstrahlengang angeordneten Umlenkspiegel (S3') in einer zur ersten Richtung entgegengesetzen Richtung weiterleitet, und daß das Licht von dem zweiten Umlenkspiegel (S6) durch das Objekt 92) hindurch in den zweiten Strahlengang (S5') in einer zur ersten Richtung entgegengesetzten Richtung eingeleitet wird.

8. Gerät nach Anspruch 7, dadurch **gekennzeichnet,** daß der dritte Umlenkspiegel (S3') das Licht des Referenzstrahlenganges in Richtung auf den zweiten Strahlengang umlenkt, der einen teildurchlässigen 45-Grad-Spiegel (S5') einschließt, der sowohl das Licht von dem Objekt (2) als auch das Licht von dem Referenzstrahlengang auf den elektrooptischen Wandler (10) leitet.

9. Gerät nach einem der vorhergehenden Ansprüche, dadurch **gekennzeichnet,** daß der elektrooptische Wandler eine Fernsehkamera ist.

10. Gerät nach einem der vorhergehenden Ansprüche, dadurch **gekennzeichnet,** daß es zur abbildung eines Elektrophoreseobjektes auf dem elektrooptischen Wandler (10) verwendet wird.

# Fig.1

0 251 225

Fig. 2